# EUROPÄISCHE PATENTSCHRIFT

(11) **EP 1 956 349 B1**
(45) Veröffentlichungstag und Bekanntmachung des Hinweises auf die Patenterteilung: **13.01.2016**
(21) Anmeldenummer: 08000764.4
(22) Anmeldetag: 16.01.2008
(51) Int. Cl.: G01F 23/284, G01F 23/26

(54) **Füllstandsschalter und Verfahren zur Erfassung des Füllzustands eines in einem Behälter vorgesehenen Mediums**
Fill level switch and method for measuring the fill level of a medium in a container
Commutateur de niveau de remplissage et procédé de détection du niveau de remplissage d'un milieu contenu dans un récipient

(30) Priorität: 12.02.2007 DE 102007007407
(43) Veröffentlichungstag der Anmeldung: 13.08.2008
(73) Patentinhaber: Krohne S.A., 26103 Romans - Cedex (FR)
(72) Erfinder: Neven, Jef, 26540 Mours (FR); Pichot, Vincent, 38470 L'Albenc (FR)
(74) Vertreter: Gesthuysen Patent- und Rechtsanwälte

(56) Entgegenhaltungen:
- DE-A1- 10 023 850
- DE-A1-102005 027 344
- JP-A- H1 151 745
- JP-A- 2001 183 217
- US-A- 4 495 807
- US-A1- 2006 096 368

## Beschreibung

Die Erfindung betrifft einen Füllstandsschalter, zur Erfassung des Füllzustands eines in einem Behälter vorgesehenen Mediums und zur Ausgabe eines dem Füllzustand entsprechenden Schaltsignals, sowie ein Verfahren zur Erfassung des Füllzustands eines in einem Behälter vorgesehenen Mediums und zur Ausgabe eines dem Füllzustand entsprechenden Schaltsignals.

Derartige Füllstandsschalter sind aus der Praxis gut bekannt und werden im allgemeinen als Grenzstandssensoren verwendet, um festzustellen, ob das in dem Behälter vorgesehene Medium unter- oder oberhalb einer vorbestimmten Füllstandshöhe steht. Eingesetzt werden derartige Füllstandsschalter in den verschiedensten industriellen Anwendungsgebieten in praktisch allen Bereichen der Verfahrenstechnik. Häufig sind Verwendungen für Flüssigkeiten vorgesehen, Anwendungen bei pastösen oder schüttbaren Medien sind jedoch ebenfalls möglich. Bei Flüssigkeiten sind typische Anwendungen Überlauf- und Trockenlaufschutz.

Aus dem Stand der Technik sind unterschiedliche Arten von Füllstandsschaltern bekannt, wie Vibrationsfüllstandsschalter und kapazitive Füllstandsschalter. Bei den aus der Praxis bekannten Geräten (siehe z. B., DE 100 23 850 und US 4495807) ist es jedoch häufig problematisch, daß sich das ausgegebene Schaltsignal, das den Füllzustand des in dem Behälter vorgesehenen Mediums angeben soll, verändert, ohne daß das Medium die vorbestimmte Füllstandshöhe, an der das Schaltsignal wechseln soll, erreicht hat. Diese Problematik ist häufig auf andere sich ändernde Umgebungsparameter, wie z. B. die Temperatur, zurückzuführen.

Es ist die Aufgabe der Erfindung, einen derartigen Füllstandsschalter und ein derartiges Verfahren zur Erfassung des Füllzustands eines in einem Behälter vorgesehenen Mediums und zur Ausgabe eines dem Füllzustand entsprechenden Schaltsignals anzugeben, mit denen eine von äußeren Parametern, wie der Temperatur, möglichst unabhängige Erfassung des Füllzustands ermöglicht wird.

Ausgehend von dem eingangs beschriebenen Füllstandsschalter ist diese Aufgabe dadurch gelöst, daß der Füllstandsschalter einen Signalgenerator zur Erzeugung eines elektromagnetischen Signals und eine Meßleiteranordnung sowie eine Referenzleiteranordnung aufweist, in die jeweils ein von dem Signalgenerator erzeugtes elektromagnetisches Signal einkoppelbar ist, wobei die Meßleiteranordnung derart ausgebildet und angeordnet ist, daß das in die Meßleiteranordnung eingekoppelte Signal sich in Abhängigkeit davon ändert, ob die Meßleiteranordnung von dem Medium umgeben ist oder nicht, und die Referenzleiteranordnung derart ausgebildet und angeordnet ist, daß das in die Referenzleiteranordnung eingekoppelte Signal unabhängig vom Füllzustand des Mediums ist, wobei an einer vorbestimmten Stelle der Meßleiteranordnung ein Meßspannungsabgriff zur Bestimmung einer Meßspannung und einer vorbestimmten Stelle der Referenzleiteranordnung ein Referenzspannungsabgriff zur Bestimmung einer Referenzspannung vorgesehen sind und wobei ein Spannungsvergleicher zum Vergleichen der Meßspannung mit der Referenzspannung und zur vergleichsabhängigen Ausgabe des Schaltsignals vorgesehen ist.

Erfindungsgemäß wird also ein derartiger Füllstandsschalter bereitgestellt, bei dem ein in eine Meßleiteranordnung eingekoppeltes elektromagnetisches Signal mit einem in eine Referenzleiteranordnung eingekoppelten elektromagnetischen Signals verglichen wird, um auf diese Weise den Einfluß äußerer Parameter, wie Temperaturdrifts, als Fehlerquellen für die Erfassung des Füllzustands möglichst auszuschließen. Als Füllzustand des Mediums wird dabei die Tatsache erfaßt, ob das in dem Behälter befindliche Medium unter- bzw. oberhalb eines vorbestimmten Füllstands steht. Maßgeblich dafür ist die Wechselwirkung des in die Meßleiteranordnung eingekoppelten elektromagnetischen Signals mit seiner Umgebung. Erfindungsgemäß ist dazu die Meßleiteranordnung derart ausgebildet und angeordnet, daß sich das in die Meßleiteranordnung eingekoppelte elektromagnetische Signal in Abhängigkeit von seiner Umgebung ändert. Wird die Umgebung der Meßleiteranordnung von dem Medium gebildet, so liegt also ein anderes Signal vor als in dem Fall, daß die Umgebung frei von dem Medium ist, das Medium die Meßleiteranordnung also noch nicht erreicht hat.

Auf diese Weise können zwei Füllzustände unterschieden werden, nämlich "Meßleiteranordnung erreicht" und "Meßleiteranordnung noch nicht erreicht". Mit anderen Worten heißt das, daß der erfindungsgemäße Füllstandsschalter in dem Moment sein von ihm ausgegebenes Schaltsignal wechselt, in dem das Medium das Ende der Meßleiteranordnung erreicht. Das gilt sowohl für steigende Füllstände, bei denen das Medium von unten her kommend erstmals mit der Meßleiteranordnung in erfindungsgemäß relevanter Weise in Wechselwirkung tritt, aber auch für den Fall, daß bei sinkendem Füllstand das Medium unter das Ende der Meßleiteranordnung sinkt, so daß keine entsprechende Wechselwirkung mehr besteht.

Grundsätzlich sind unterschiedliche Arten elektromagnetischer Signale zur Einkopplung in die Meßleiteranordnung und in die Referenzleiteranordnung geeignet. Grundsätzlich könnten z. B. auch elektromagnetische Signale mit sich ändernden Frequenzen verwendet werden. Gemäß einer bevorzugten Weiterbildung der Erfindung ist jedoch vorgesehen, daß als von dem Signalgenerator erzeugtes elektromagnetisches Signal ein Hochfrequenzsignal mit einer vorbestimmten Frequenz verwendet wird.

Dabei könnten in die Meßleiteranordnung und in die Referenzleiteranordnung verschiedene elektromagnetische Signale eingekoppelt werden. Gemäß einer bevorzugten Weiterbildung der Erfindung ist jedoch vorgesehen, daß in die Meßleiteranordnung und in die Referenzleiteranordnung über einen Signalkoppler jeweils das gleiche Signal eingekoppelt wird.

Grundsätzlich sind Anordnungen und Ausgestaltungen der Meßleiteranordnung denkbar, die sich außerhalb des Behälters befinden und gleichwohl zu einer derartigen Wechselwirkung des Mediums mit dem in die Meßleiteranordnung eingekoppelten Signal führen, die die in Rede stehende Erfassung des Füllzustands erlauben. Gemäß einer bevorzugten Weiterbildung der Erfindung ist jedoch vorgesehen, daß die Meßleiteranordnung in den Behälter eingeführt ist. Wie zuvor schon ausgeführt, kann der Schaltpunkt, also die Füllstandshöhe des Mediums, bei der ein Wechsel des Schaltsignals erfolgt, durch das Ende der Meßleiteranordnung definiert sein.

Um eine Wechselwirkung der Referenzleiteranordnung mit dem Medium zu vermeiden, könnte diese grundsätzlich außerhalb des Behälters vorgesehen sein. Gemäß einer bevorzugten Weiterbildung der Erfindung ist jedoch vorgesehen, daß die Meßleiteranordnung und die Referenzleiteranordnung innerhalb eines gemeinsamen, in den Behälter eingeführten Sondenstabs vorgesehen sind. Ganz besonders bevorzugt ist dafür ein dielektrischer Sondenstab vorgesehen.

Um nun zu erreichen, daß die Meßleiteranordnung im erfindungsgemäßen Sinne mit ihrer Umgebung, in der sich bei entsprechender Füllstandshöhe das Medium befindet, wechselwirken kann, während für die Referenzleiteranordndung eine entsprechende Wechselwirkung ausgeschlossen wird, ist gemäß einer bevorzugten Weiterbildung der Erfindung vorgesehen, daß die Meßleiteranordnung im Außenbereich des dielektrischen Sondenstabs und die Referenzleiteranordnung im Innenbereich des dielektrischen Sondenstabs vorgesehen ist.

Insbesondere bei dieser Ausgestaltung, aber auch bei anderen Anordnungen von Meßleiteranordnung und Referenzleiteranordnung, ist gemäß einer bevorzugten Weiterbildung der Erfindung vorgesehen, daß die Meßleiteranordnung und die Referenzleiteranordnung jeweils in Form einer Doppelleiteranordnung ausgestaltet sind. Vorzugsweise erfolgt dabei der Spannungsabgriff zwischen den beiden Leitern des Doppelleiters. Sind nun die beiden Leiter der Meßleiteranordnung im Außenbereich des Sondenstabs vorgesehen, so kann erreicht werden, daß die elektromagnetischen Feldlinien aufgrund des in die Meßleiteranordnung eingekoppelten elektromagnetischen Signals wenigstens teilweise außerhalb des Sondenstabs verlaufen, so daß die Umgebung des Sondenstabs das in die Meßleiteranordnung eingekoppelte elektromagnetische Signal beeinflußt. Maßgeblich ist dabei insbesondere eine kapazitive Beeinflussung aufgrund der sich ändernden Dielektrizitätskonstante in Abhängigkeit davon, ob das Medium den Sondenstab bereits umgibt oder nicht. Ist die als Doppelleiteranordnung ausgestaltete Referenzleiteranordnung, wie zuvor ausgeführt, im Innenbereich des dielektrischen Sondenstabs vorgesehen, so kann erreicht werden, daß die Feldlinien praktisch vollständig innerhalb des Sondenstabs verlaufen, so daß unabhängig von der Füllhöhe des Mediums es zu keiner Änderung der Dielektrizitätskonstanten der von der Referenzleiteranordnung "gespürten" Umgebung kommt.

Gemäß einer bevorzugten Weiterbildung der Erfindung ist ferner vorgesehen, daß bei Ausgestaltung der Meßleiteranordnung als Doppelleiteranordnung diese ein offenes Ende aufweist. Da sich beim Einkoppeln eines Hochfrequenzsignals in die Meßleiteranordnung und in die Referenzleiteranordnung jeweils eine stehende Welle ausbildet, kann auf diese Weise das Ereignis, daß das Medium das Ende der Meßleiteranordnung erreicht hat, über einen Wechsel von "offenes Ende" auf "geschlossenes Ende" und der damit verknüpften Signaländerung erfaßt werden. Konkret bedeutet dies, daß die Meßleiteranordnung in dem Augenblick, in dem das Medium dessen Ende erreicht hat, virtuell länger wird, so daß sich die stehende Welle verschiebt. Damit ist eine Änderung der zwischen den beiden Leitern abgegriffenen Meßspannung verbunden, so daß der Schaltpunkt des Füllstandsschalters über eine Änderung der Differenz zwischen Meßspannung und Referenzspannung erfaßt wird. Wesentlich ist nun, daß Temperaturdrifts in der Meßspannung alleine nicht als Erfassung des Schaltpunkts interpretiert werden können, da entsprechende Temperaturdrifts auch die Referenzleiteranordnung und damit die dort abgegriffene Referenzspannung betreffen.

Zuvor ist immer von einer Meßleiteranordnung und einer Referenzleiteranordnung gesprochen worden. Dabei kann natürlich auch eine Mehrzahl von Meßleiteranordnungen vorgesehen sein, so daß bei entsprechender geometrischer Anordnung auch eine Mehrzahl von Schaltpunkten bei verschiedenen vorbestimmten Füllständen des Mediums in dem Behälter definiert werden können. Grundsätzlich könnte dabei jeder Meßleiteranordnung eine eigene Referenzleiteranordnung zugeordnet sein. Gemäß einer bevorzugten Weiterbildung der Erfindung ist jedoch vorgesehen, daß die Mehrzahl von Meßleiteranordnungen mit einer einzigen Referenzleiteranordnung auskommt.

Ausgehend von dem eingangs beschriebenen Verfahren zur Erfassung des Füllzustands eines in einem Behälter vorgesehenen Mediums und zur Ausgabe eines dem Füllzustand entsprechenden Schaltsignals ist die weiter oben angegebene Aufgabe dadurch gelöst, daß in eine Meßleiteranordnung und eine Referenzleiteranordnung jeweils ein elektromagnetisches Signal eingekoppelt wird, die Meßleiteranordnung derart ausgebildet und angeordnet ist, daß das in die Meßleiteranordnung eingekoppelte Signal sich in Abhängigkeit davon ändert, ob die Meßleiteranordnung von dem Medium umgeben ist oder nicht und die Referenzleiteranordnung derart ausgebildet und angeordnet ist, daß das in die Referenzleiteranordnung eingekoppelte Signal unabhängig von dem Füllzustand des Mediums ist, wobei an einer vorbestimmten Stelle der Meßleiteranordnung eine Meßspannung abgegriffen wird, an einer vorbestimmten Stelle der Referenzleiteranordnung eine Referenzspannung abgegriffen wird und wobei die Meßspannung mit der Referenzspannung verglichen wird und vergleichsabhängig das Schaltsignal ausgegeben wird.

Bevorzugte Weiterbildungen des erfindungsgemäßen Verfahrens ergeben sich in Analogie zu den weiter oben beschriebenen bevorzugten Weiterbildungen des erfindungsgemäßen Füllstandsschalters.

Im folgenden wird die Erfindung unter Bezugnahme auf die Zeichnung anhand zweier bevorzugter Ausführungsbeispiele im Detail erläutert. In der Zeichnung zeigt
- Fig. 1: schematisch einen Füllstandsschalter gemäß einem ersten bevorzugten Ausführungsbeispiel der Erfindung und
- Fig. 2: schematisch einen Sondenstab eines Füllstandsschalters gemäß einem zweiten bevorzugten Ausführungsbeispiel der Erfindung.

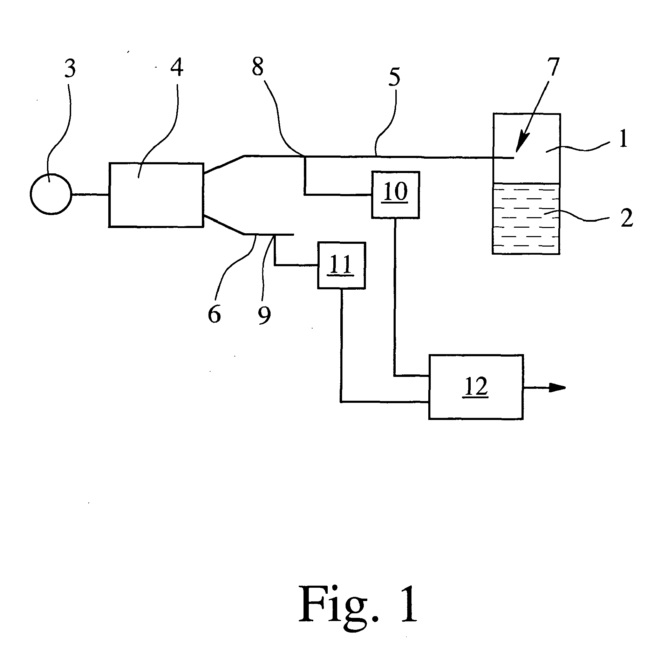

Aus Fig. 1 ist schematisch ein Füllstandsschalter gemäß einem ersten bevorzugten Ausführungsbeispiel der Erfindung ersichtlich, der zur Erfassung des Füllzustands eines in einem Behälter 1 vorgesehenen Mediums 2 und zur Ausgabe eines dem Füllzustand entsprechenden Schaltsignals vorgesehen ist. Dazu weist der Füllstandsschalter einen Signalgenerator 3 zur Erzeugung eines elektromagnetischen Signals auf. Dieses elektromagnetische Signal wird mittels eines Signalskopplers 4 in eine Meßleiteranordnung 5 und eine Referenzleiteranordnung 6 eingekoppelt. Während die Meßleiteranordnung 5 in den Behälter 1 eingeführt ist, so daß ihr Ende 7 an einer vorbestimmten Füllstandshöhe in dem Behälter 1 endet, ist die Referenzleiteranordnung 6 vollständig außerhalb des Behälters 1 vorgesehen. Auf diese Weise wird erreicht, daß die Meßleiteranordnung 5 auf erfindungswesentliche Weise mit dem Medium 2 im Behälter 1 wechselwirkt, sobald dieses den vorbestimmten Füllstand erreicht hat, während eine entsprechende Wechselwirkung zwischen der Referenzleiteranordnung 6 und dem Medium 2 praktisch ausgeschlossen ist.

An einer jeweils vorbestimmten Stelle an der Meßleiteranordnung 5 und der Referenzleiteranordnung 6 erfolgt ein Meßspannungsabgriff 8 bzw. ein Referenzspannungsabgriff 9, so daß entsprechende Spannungssignale über einen Meßspannungsdetektor 10 bzw. einen Referenzspannungsdetektor 11 auf einen Spannungsvergleicher 12 geführt werden. Abhängig vom Vergleich dieser beiden Spannungen gibt der Spannungsvergleicher ein Schaltsignal aus, was insbesondere bedeutet, daß es zu einem Wechsel des Schaltsignals kommt, wenn das Medium 2 im Behälter 1 gerade das Ende 7 der Meßleiteranordnung 5 erreicht hat.

Gemäß dem vorliegend beschriebenen ersten bevorzugten Ausführungsbeispiel der Erfindung ist vorgesehen, daß sowohl die Meßleiteranordnung 5 als auch die Referenzleiteranordnung 6 jeweils als Doppelleiteranordnung mit zwei parallel zueinander verlaufenden Leitern ausgebildet sind. Dabei ist die Meßleiteranordnung 5 als Doppelleiteranordnung mit offenem Ende 7 ausgestaltet, so daß es beim Erreichen des Mediums 2 in dem Behälter 1 zu einem Wechsel "offenes Ende" auf "geschlossenes Ende" kommt, was letztlich zu einer Änderung der am Meßspannungsabgriff 8 abgegriffenen Meßspannung zwischen den beiden Leitern führt. Dadurch daß die Meßleiteranordnung 5 und die Referenzleiteranordnung 6 praktisch den gleichen Temperatureinflüssen unterliegen, werden somit nur derartige Änderungen der Meßspannung als Schaltsignal interpretiert, die tatsächlich auf eine Wechselwirkung mit dem Medium 2 in dem Behälter 1 zurückzuführen sind und nicht lediglich auf Änderungen anderer äußerer Parameter, wie bei Temperaturdrifts.

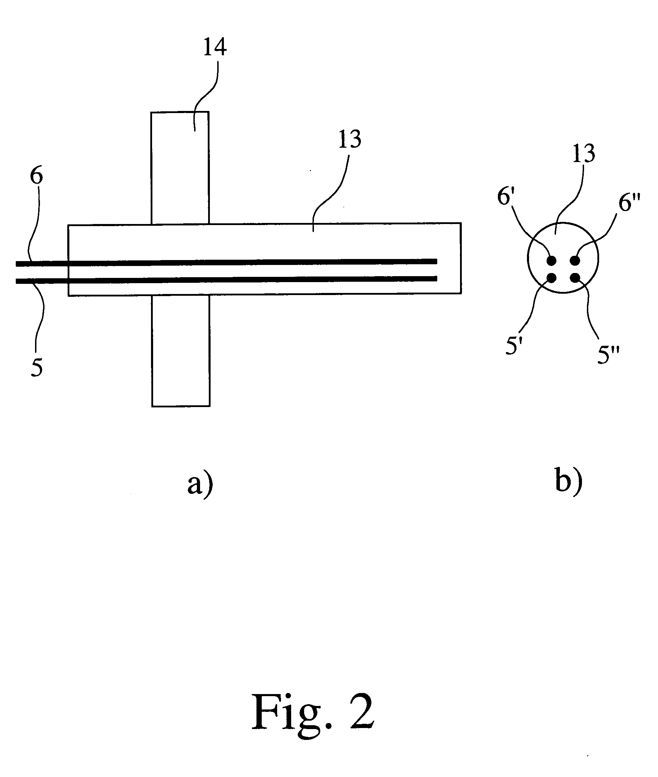

Aus Fig. 2 ist nun ein Sondenstab 13 eines ansonsten nicht weiter dargestellten Füllstandsschalters gemäß einem zweiten bevorzugten Ausführungsbeispiel der Erfindung ersichtlich. Dabei zeigt Fig. 2a schematisch einen Längsschnitt durch den Sondenstab 13, während aus Fig. 2b die Querschnittsfläche des Sondenstabs 13 ersichtlich ist.

Der dielektrische Sondenstab 13 weist einen Flansch 14 auf, so daß er in den Behälter 1 eingeführt und an einem entsprechenden, nicht weiter dargestellten Gegenflansch befestigt werden kann. Der Sondenstab 13 besteht aus einem dielektrischen Material, wie Teflon, innerhalb dessen die Meßleiteranordnung 5 und die Referenzleiteranordnung 6 angeordnet sind. Diese sind, wie insbesondere Fig. 2b entnehmbar, jeweils als Doppelleiteranordnung mit zwei parallel zueinander verlaufenden Leitern 5', 5" bzw. 6', 6" ausgestaltet. Dabei ist die Meßleiteranordnung 5 im äußeren Bereich des Sondenstabs 13 vorgesehen, während die Referenzleiteranordnung 6 sich im mittleren Bereich des Sondenstabs 13 befindet. Dies führt dazu, daß, wie ebenfalls aus Fig. 2b ersichtlich, die Feldlinien zwischen den Leitern 5', 5" der Meßleiteranordnung 5 auch außerhalb des Sondenstabs 13 verlaufen, während die Feldlinien zwischen den Leitern 6', 6" der Referenzleiteranordnung 6 im wesentlichen nur innerhalb des Sondenstabs 13 verlaufen. Dies bedeutet, daß die Referenzleiteranordnung 6 von der Umgebung außerhalb des Sondenstabs 13 praktisch nichts "spürt" und nur das in die Meßleiteranordnung 5 eingekoppelte elektromagnetische Signal davon beeinflußt wird, ob sich außerhalb des Sondenstabs 13 Medium 2 befindet oder nicht.

Grundsätzlich entspricht dies von der Funktionsweise her dem Füllstandssensor gemäß dem ersten bevorzugten Ausführungsbeispiel der Erfindung. Im Unterschied dazu sind hier jedoch die Meßleiteranordnung 5 und die Referenzleiteranordnung 6 mit hoher körperlicher Nähe zueinander vorgesehen, so daß unterschiedliche Temperaturen der Meßleiteranordnung 5 bzw. der Referenzleiteranordnung 6 praktisch vollständig ausgeschlossen werden können. Bei Temperaturdrifts sollten sich damit die zwischen den jeweiligen Leitern 5', 5", 6', 6" abgegriffene Meßspannung bzw. Referenzspannung in gleicher Weise zueinander verändern, so daß auf diese Weise eine Fehlerfassung des Schaltpunkts praktisch vollständig ausgeschlossen ist.

Um die Empfindlichkeit des vorliegend beschriebenen Meßverfahrens beim Spannungsabgriff zu verbessern, kann im übrigen vorgesehen sein, daß der Meßspannungsdetektor 10 und der Referenzspannungsdetektor 11 jeweils als logarithmisch arbeitende Detektoren ausgestaltet sind, die z. B. einen dynamischen Bereich von 60 bis 80 dB aufweisen.

## Patentansprüche

1. Füllstandsschalter, zur Erfassung des Füllzustands eines in einem Behälter (1) vorgesehenen Mediums (2) und zur Ausgabe eines dem Füllzustand entsprechenden Schaltsignals, mit einem Signalgenerator (3) zur Erzeugung wenigstens eines elektromagnetischen Signals und mit einer Meßleiteranordnung (5) sowie einer Referenzleiteranordnung (6), in die jeweils ein von dem Signalgenerator (3) erzeugtes elektromagnetisches Signals einkoppelbar ist, wobei die Meßleiteranordnung (5) derart ausgebildet und angeordnet ist, daß das in die Meßleiteranordnung (5) eingekoppelte elektromagnetische Signal sich in Abhängigkeit davon ändert, ob die Meßleiteranordnung (5) von dem Medium (2) umgeben ist oder nicht, und die Referenzleiteranordnung (6) derart ausgebildet und angeordnet ist, daß das in die Referenzleiteranordnung (6) eingekoppelte elektromagnetische Signal unabhängig vom Füllzustand des Mediums (2) ist, wobei an einer vorbestimmten Stelle der Meßleiteranordnung (5) ein Meßspannungsabgriff (8) zur Bestimmung einer Meßspannung und an einer vorbestimmten Stelle der Referenzleiteranordnung (6) ein Referenzspannungsabgriff (9) zur Bestimmung einer Referenzspannung vorgesehen sind und wobei ein Spannungsvergleicher (12) zum Vergleichen der Meßspannung mit der Referenzspannung und zur vergleichsabhängigen Ausgabe des Schaltsignals vorgesehen ist,
**dadurch gekennzeichnet,**
**daß** als Meßleiteranordnung (5) und als Referenzleiteranordnung (6) jeweils eine Doppelleiteranordnung mit jeweils zwei parallel zueinander verlaufenden Leitern (5', 5"; 6', 6") vorgesehen ist, daß die Meßleiteranordnung (5) und die Referenzleiteranordnung (6) innerhalb eines gemeinsamen dielektrischen Sondenstabs (13) vorgesehen sind und daß die Meßleiteranordnung (5) im Außenbereich des Sondenstabs (13) und die Referenzleiteranordnung (6) im Innenbereich des Sondenstabs (13) vorgesehen ist, so daß aufgrund des in die Meßleiteranordnung (5) eingekoppelten elektromagnetischen Signals elektromagnetische Feldlinien außerhalb des Sondenstabs (13) verlaufen und so daß aufgrund des in die Referenzleiteranordnung (6) eingekoppelten elektromagnetischen Signals elektromagnetische Feldlinien vollständig innerhalb des Sondenstabs (13) verlaufen.

2. Füllstandsschalter nach Anspruch 1, **dadurch gekennzeichnet, daß** in die Meßleiteranordnung (5) und in die Referenzleiteranordnung (6) über einen Signalkoppler (4) jeweils das gleiche Signal einkoppelbar ist.

3. Füllstandsschalter nach Anspruch 1 oder 2, **dadurch gekennzeichnet, daß** die Meßleiteranordnung (5) ein offenes Ende (7) aufweist.

## Claims

1. Fill level switch for detecting the fill level of a medium (2) provided in a container (1) and for transmitting a switch signal representative of that level, having a signal generator (3) for generating at least one electromagnetic signal and having a measuring circuit (5) as well as a reference circuit (6), into each of which an electromagnetic signal generated by the signal generator (3) can be coupled, wherein the measuring circuit (5) is configured and positioned so that the electromagnetic signal coupled into the measuring circuit (5) undergoes a change that depends on whether or not the measuring circuit (5) is surrounded by the medium (2), and the reference circuit (6) is configured and positioned so that the electromagnetic signal coupled into the reference circuit (6) is unaffected by the fill level of the medium (2), wherein a measuring voltage tap (8) at a specific point on the measuring circuit (5) is provided for determining a measuring voltage and a reference voltage tap (9) at a specific point on the reference circuit (6) is provided for determining a reference voltage, and wherein a voltage comparator (12) is provided for comparing the measuring voltage with the reference voltage and for emitting a comparison-derived switch signal,
**characterized in**
**that** one dual-conductor system having two conductors (5', 5", 6', 6") each running parallel to one another is provided for each of the measuring circuit (5) and the reference circuit (6), that the measuring circuit (5) and the reference circuit (6) are provided within a common dielectric tubular probe (13) and that the measuring circuit (5) is provided in the outer region of the tubular probe (13) and the reference circuit (6) is provided in the inner region of the tubular probe (13), so that electromagnetic field lines run outside of the tubular probe (13) due to the electromagnetic signals coupled into the measuring circuit (5) and so that electromagnetic field lines run completely within the tubular probe (13) due to the electromagnetic signals coupled into the reference circuit (6).

2. Fill level switch according to claim 1, **characterized in that** the same signal can be coupled into each of the measuring circuit (5) and the reference circuit (6) via a signal coupler (4).

3. Fill level switch according to claim 1 or 2, **characterized in that** the measuring circuit (5) has an open end (7).

## Revendications

1. Contacteur de niveau destiné à détecter le niveau de remplissage d'un fluide (2) dans un récipient (1) et à délivrer un signal de commutation qui correspond au niveau de remplissage,
le contacteur présentant un générateur (3) de signaux qui génère au moins un signal électromagnétique et un ensemble (5) de conducteur de mesure ainsi qu'un ensemble (6) de conducteur de référence dans chacun desquels un signal électromagnétique formé par le générateur (3) de signaux peut être injecté,
l'ensemble (5) de conducteur de mesure étant configuré et disposé de telle sorte que le signal électromagnétique injecté dans l'ensemble (5) de conducteur de mesure se modifie selon que l'ensemble (5) de conducteur de mesure est entouré ou non par le fluide (2),
l'ensemble (6) de conducteur de référence étant configuré et disposé de telle sorte que le signal électromagnétique injecté dans l'ensemble (6) de conducteur de référence soit indépendant du niveau de remplissage par le fluide (2),
un prélèvement (8) de tension de mesure étant prévu en un emplacement prédéterminé de l'ensemble (5) de conducteur de mesure pour déterminer la tension de mesure et un prélèvement (9) de tension de référence prévu pour déterminer une tension de référence étant prévu en un emplacement prédéterminé de l'ensemble (6) de conducteur de référence,
un comparateur (12) de tensions qui compare la tension de mesure à la tension de référence et qui délivre le signal de commutation en fonction de la comparaison étant prévu,
**caractérisé en ce que**
des ensembles à double conducteur qui présentent chacun deux conducteurs (5', 5''; 6', 6") s'étendant parallèlement l'un à l'autre sont prévus respectivement comme ensemble (5) de conducteur de mesure et comme ensemble (6) de conducteur de référence,
**en ce que** l'ensemble (5) de conducteur de mesure et l'ensemble (6) de conducteur de référence sont prévus à l'intérieur d'un barreau diélectrique commun de sonde (13),
**en ce que** l'ensemble (5) de conducteur de mesure est prévu dans la partie extérieure du barreau de sonde (13) et l'ensemble (6) de conducteur de référence dans la partie intérieure du barreau de sonde (13) de telle sorte que sur la base du signal électromagnétique injecté dans l'ensemble (5) de conducteur de mesure, des lignes de champ électromagnétique s'étendent à l'extérieur du barreau de sonde (13) et que sur la base du signal électromagnétique injecté dans l'ensemble (6) de conducteur de référence, des lignes de champ électromagnétique s'étendent complètement à l'intérieur du barreau de sonde (13).

2. Contacteur de niveau selon la revendication 1, **caractérisé en ce que** le même signal peut être injecté par un injecteur (4) de signaux dans l'ensemble (5) de conducteur de mesure et dans l'ensemble (6) de conducteur de référence.

3. Contacteur de niveau selon les revendications 1 ou 2, **caractérisé en ce que** l'ensemble (5) de conducteur de mesure présente une extrémité (7) ouverte.
